# EUROPEAN PATENT SPECIFICATION

(11) **EP 2 366 092 B1**
(45) Date of publication and mention of the grant of the patent: **10.06.2015**
(21) Application number: 09744692.6
(22) Date of filing: 04.11.2009
(51) Int. Cl.: G01B 11/06, G01B 9/02

(54) **APPARATUS AND METHOD FOR OPTICALLY MEASURING BY INTERFEROMETRY THE THICKNESS OF AN OBJECT**
VERFAHREN UND VORRICHTUNG ZUR OPTISCHEN MESSUNG DER DICKE EINES OBJEKTS DURCH INTERFERROMETRIE
APPAREIL ET PROCÉDÉ POUR MESURER OPTIQUEMENT PAR INTERFÉROMÉTRIE L'ÉPAISSEUR D'UN OBJET

(30) Priority: 13.11.2008 IT BO20080691
(43) Date of publication of application: 21.09.2011
(73) Proprietor: Marposs Societa' Per Azioni, 40010 Bentivoglio (BO) (IT)
(72) Inventor: PHILLIPS, Leonardo Gwin Roberto, I-35020 Due Carrare (PD) (IT)
(86) International application number: PCT/EP2009/064608
(87) International publication number: WO 2010/054969

(56) References cited:
- WO-A-2005/017489
- DE-A1-102006 016 131
- US-A1- 2008 151 253

## Description

### Technical field

The present invention relates to an apparatus and a method for optically measuring by interferometry the thickness of an object.

The present invention can be advantageously applied for optically measuring by interferometry the thickness of slices, or wafers, of semiconductor material (typically silicon), to which reference will be explicitly made in the specification without loss of generality.

### Background art

A slice of semiconductor material is machined, for example, to obtain integrated circuits or other electronic components in the semiconductor material. In particular, when the slice of semiconductor material is very thin, the slice of semiconductor material is placed on a support layer (typically made of plastic or glass) which provides a higher mechanical sturdiness, and thus an ease in handling. Generally, it is necessary to mechanically machine the slice of semiconductor material by grinding and polishing for obtaining a thickness which is regular and corresponds to a desired value. In the course of this mechanical machining phase of the slice of semiconductor material it is necessary to measure or keep under control the thickness for ensuring to obtain the desired value.

For measuring the thickness of a slice of semiconductor material it is known to employ gauging heads that have mechanical feelers touching an upper surface of the slice of semiconductor material being machined. This measuring technology may affect the slice of semiconductor material during the measuring operation owing to the mechanical contact with the mechanical feelers, and it doesn't enable to measure very thin thicknesses (typically smaller than 100 micron).

For measuring the thickness of a slice of semiconductor material it is known to use capacitive probes, inductive probes (of the eddy-current type or other types), or ultrasound probes. Since these measuring technologies are of the contactless type, they do not affect the slice of semiconductor material in the course of the measuring and can measure the thickness of the slice of semiconductor material even when there is the support layer. However, these measuring technologies are limited both in the dimensions that can be measured (typically thicknesses being smaller than 100 microns cannot be measured), and in the maximum resolution that can be achieved (typically not smaller than 10 microns.

Optical probes, in some cases associated with interferometric measures, are used for overcoming the limits of the above described measuring technologies. For instance, US patent US-A1-6437868 and the published Japanese patent application JP-A-08-216016 describe apparatuses for optically measuring the thickness of a slice of semiconductor material. Some of the known apparatuses include an infrared radiation source, a spectrometer, and an optical probe, which is connected to the infrared radiation source and to the spectrometer by means of optical fibres, it is placed in such a way to face the slice of semiconductor material to be measured, and it carries lenses for focusing the radiations on the slice of semiconductor material to be measured. The infrared radiation source emits a beam of infrared radiations (generally having a wavelength of about 1300 nm), more specifically a low coherence beam which means that it is not monofrequency (single frequency being constant in time), but it is composed of a number of frequencies (typically having wavelengths variable in an interval of about 50 nm around the central value). Infrared radiations are employed since the currently used semiconductor materials are made of silicon which is sufficiently transparent to the infrared radiations. In some of the known apparatuses, the infrared radiation source is composed of a SLED (Superluminescent Light Emitting Device) which can emit a beam of infrared radiations having a bandwidth with an order of magnitude of about 50 nm around the central value.

However, even by using optical probes associated to interferometric measures of the above mentioned type, thicknesses being smaller than about 10 microns can not be measured, whereas the semiconductor industry is now requiring to measure thicknesses of few or very few microns.

### Disclosure of the invention

The purpose of the present invention is to provide an apparatus and a method for optically measuring by interferometry the thickness of an object which overcome the above described inconveniences, and can be concurrently easily and cheaply implemented.

The purpose is reached by an apparatus and a method for optically measuring by interferometry the thickness of an object according to what is claimed in the accompanying claims.

### Brief Description of the Drawings

The present invention is now described with reference to the enclosed sheets of drawings, given by way of non limiting example, wherein:
- figure 1 is a simplified view, with some parts removed for the sake of clarity, of an apparatus according to the present invention for optically measuring by interferometry the thickness of a slice of semiconductor material;
- figure 2 is a simplified, cross-sectional, side view of the slice of semiconductor material while the thickness of which is measured;
- figure 3 is a simplified view, with some parts removed for the sake of clarity, of an infrared radiation source of the apparatus of figure 1; and
- figure 4 is a diagram showing a band composition carried out in the infrared radiation source of figure 3.

### Best mode for carrying out the invention

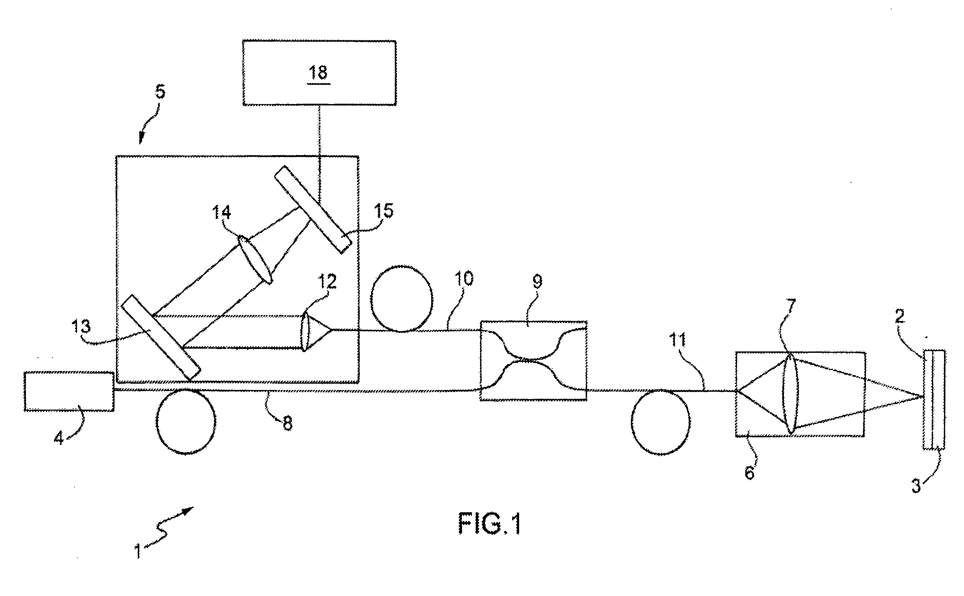

In figure 1, the reference number 1 indicates, on the whole, an apparatus for optically measuring by interferometry the thickness of an object **2** formed by a slice of semiconductor material.

According to the embodiment illustrated in figure 1 including per se known features, the slice **2** of semiconductor material is placed on a support layer **3** (typically made of plastic or glass) which serves to provide a higher mechanical sturdiness, and thus an ease in handling. According to a different embodiment, herein not illustrated, the support layer **3** is omitted.

The apparatus **1** includes an infrared radiation source **4,** a spectrometer **5,** and an optical probe **6** which is connected by means of optical fibers to the infrared radiation source **4** and to the spectrometer **5,** it is arranged in such a way to face the slice **2** of semiconductor material to be measured, and it carries lenses **7** for focusing the radiations on the slice **2** of semiconductor material to be measured. Typically, the optical probe **6** is arranged in such a way to be perpendicular, as shown in figure 1, or slightly angled with respect to the slice **2** of semiconductor material to be measured, the optical probe **6** being set apart from the latter by air or liquid, through which the infrared radiations propagate.

According to the embodiment shown in figure 1, there is a first optical fiber **8** connecting the radiation source **4** to an optical coupler **9,** a second optical fiber **10** connecting the optical coupler **9** to the spectrometer **5,** and a third optical fiber **11** connecting the optical coupler **9** to the optical probe **6.** The optical fibers, more specifically the first **8,** second **10** and third **11** optical fibers can end up at a circulator, which is per se known and thus not illustrated in figure 1, or at another device serving as the coupler **9.**

According to the embodiment illustrated in figure 1, the spectrometer **5** includes at least a lens **12** collimating the radiations received by the second optical fiber **10** on a diffractor **13** (typically composed of a grating), and at least a further lens **14** focusing the radiations reflected by the diffractor **13** on a radiation detector **15** (typically formed by an array of photosensitive elements, for example a "CCD" sensor).

The infrared radiation source **4** emits a low coherence beam of infrared radiations, which means that it is not monofrequency (a single frequency being constant in time), but it is composed of a number of frequencies.

Infrared radiations are employed, since the currently used semiconductor materials are made of silicon, and the silicon is sufficiently transparent to the infrared radiations.

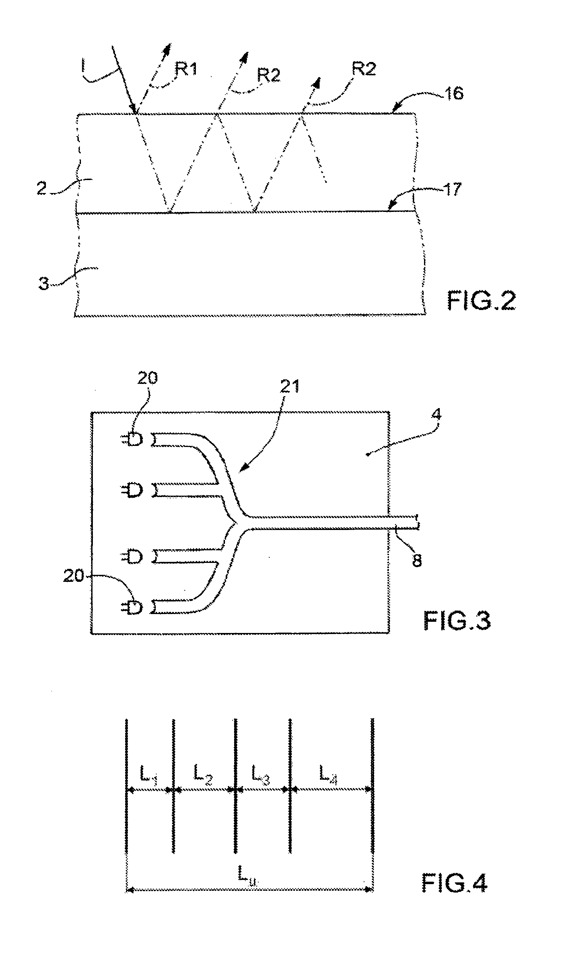

According to what is illustrated in figure 2 and is generally known, when used the optical probe **6** emits a beam of infrared radiations **I** which is directed onto the slice **2** of semiconductor material to be measured, and in part (reflected radiations **R1**) it is reflected towards the optical probe **6** by an external surface **16** without entering the slice **2** of semiconductor material, and in part (reflected radiations **R2)** it enters the slice **2** of semiconductor material and is reflected towards the optical probe **6** by an internal surface **17** opposite with respect to the external surface **16.** It should be noted that, for the sake of understanding, in figure 2 the incident radiations I and the reflected radiations **R** are represented forming an angle which differs from a 90° angle with respect to the slice **2** of semiconductor material. In reality, as stated hereinbefore, these radiations can be perpendicular or substantially perpendicular to the slice **2** of semiconductor material.

The optical probe **6** catches both the radiations **R1** that have been reflected by the external surface **16** without entering the slice **2** of semiconductor material, and the radiations **R2** that have been reflected by the internal surface **17** entering the slice **2** of semiconductor material. As shown in figure 2, the radiations **R2,** that have been reflected by the internal surface **17** entering the slice **2** of semiconductor material, can leave the slice **2** of semiconductor material after just one reflection on the internal surface **17,** after two subsequent reflections on the internal surface **17,** or more generally, after a number N of subsequent reflections on the internal surface **17.** Obviously, upon each reflection a part of the radiation **R2** leaves the slice **2** of semiconductor material through the external surface **16** until the residual intensity of the radiations **R2** is almost null.

As previously stated, the beam of infrared radiations is composed of radiations having different frequencies (that is, having different wavelengths).

Among these radiations there is certainly a radiation the wavelength thereof is such that twice the thickness of the slice **2** of semiconductor material to be checked is equal to an integer multiple of the wavelength itself. As a consequence, this radiation that is reflected by the internal surface **17,** leaves the slice **2** of semiconductor material in phase with the radiation of the same wavelength reflected by the external surface **16,** and is added to the latter so determining a maximum of interference (constructive interference). On the contrary, a radiation which has a wavelength being such that twice the thickness of the slice **2** of semiconductor material to be checked is equal to an odd multiple of the half-wavelength, when reflected by the internal surface **17** leaves the slice **2** of semiconductor material in antiphase with the radiation of the same wavelength reflected by the external surface **16,** and is added to the latter so determining a minimum of interference (destructive interference).

The result of the interference between reflected radiations **R1** and **R2** is caught by the optical probe **6** and is conveyed to the spectrometer **5.** The spectrum which is detected by the spectrometer **5** for each frequency (that is, for each wavelength) has a different intensity determined by the alternation of constructive and destructive interferences. A processing unit **18** receives the spectrum from the spectrometer **5** and analyses it by means of some mathematical operations, per se known. In particular, by performing Fourier analysis as a function of frequency and by knowing the refractive index of the semiconductor material, the processing unit **18** can determine the thickness of the slice **2** of semiconductor material by suitably processing the Fourier analysis of the spectrum provided by the spectrometer **5.**

Going into more details, in the processing unit **18** the spectrum (as a function of the wavelength) is processed, in a per se known way, as a periodic function which can be mathematically expressed by a Fourier series. The interference of the reflected radiations **R1** and **R2** expands as a sinusoidal function (wherein there is an alternation of constructive and destructive interferences); the frequency of this sinusoidal function is proportional to the length of the optical path through the thickness of the slice **2** of semiconductor material through which the radiation passes. By applying a Fourier transform, the value of the optical path through the slice **2** of semiconductor material and thus the equivalent thickness of the slice **2** of semiconductor material (corresponding to half the optical path) are determined. The actual thickness of the slice **2** of semiconductor material can be easily obtained by dividing the equivalent thickness of the slice **2** of semiconductor material by the refractive index of the semiconductor material of the slice **2** (for example, for the silicon it is equal to about 3,5).

According to the present invention, the infrared radiation source **4** can emit an infrared radiation beam having a bandwidth greater than 100 nm and preferably equal to about 200 nm around the central value. As the bandwidth of the infrared radiation beam emitted by the radiation source **4** is definitely greater (at least twice the amount) than the bandwidth used in the similar known apparatuses, the above described apparatus 1 can measure thicknesses of few microns, whereas the similar known apparatuses can not measure thicknesses being smaller than 10 microns. In fact, on the basis of theoretical considerations and experimental tests, it has been noted that by greatly increasing the bandwidth of the infrared radiation beam emitted by the radiation source **4** it is possible to considerably decrease the limit defined by the smallest measurable thickness.

A particular embodiment also provides for reducing the central value of the emission band of the radiation source **4.** In particular, according to this embodiment the central value of the emission band of the radiation source **4** is comprised between 1100 nm and 1300 nm and it is typically of about 1200 nm whereas in the similar known apparatus it is typically of about 1300nm.

The aim of such reduction of the central value of the emission band of the radiation source **4** is to decrease the smallest measurable thickness; in fact, it has been noted that by reducing the wavelength of the infrared radiations it is possible to measure smaller thicknesses. It is to be noted that the wavelength reduction of the infrared radiations cannot be too considerable since by reducing the wavelength, the transparency of the semiconductor material is reduced, too, and thus it is more difficult to perform a proper measurement.

In order that the bandwidth of the infrared radiation beam emitted by the radiation source **4** is so considerably increased, it is necessary to completely change the structure of the radiation source **4** that, in the known apparatuses, is typically composed of a SLED (Superluminescent Light Emitting Diode) which cannot have a bandwidth greater than 50-60 nm.

According to what is illustrated in figure 3, the radiation source **4** includes four distinct emitters **20** (in particular four SLEDs **20)** emitting respective radiation beams that differ from one another and are concurrently activated. Moreover, the radiation source **4** includes an optical adder **21** comprising optical fibers which ends into the first optical fiber **8** and enables to join in a single comprehensive radiation beam the four radiation beams emitted by the four SLEDs **20.**

The optical adder **21** can be implemented, for example, by means of one or more per se known couplers or circulators in a way which is per se known and thus herein not illustrated in details. The radiation beam emitted by each SLED **20** has a wavelength band which is different from, and substantially complementary to, the wavelength bands of the radiation beams emitted by the other SLEDs **20** in such a way that the bandwidth **L_{U}** of the comprehensive radiation beam composed by the joint of the four radiation beams of the single SLEDs **20** has a bandwidth which is definitely greater than the bandwidth **L_{1.4}** of the radiation beam emitted by each SLED **20.**

Figure 4 shows, in a very schematic way and with the only purpose of simplifying the understanding, the composition diagram of the different bandwidths **L_{1...4}** emitted by each SLED **20.** In principle the comprehensive bandwidth **Lᵤ** is equal to the sum of the bandwidth **L_{1...4}** of the radiation beam emitted by each SLED **20.** In practical experience there occur not negligible phenomena of overlap among radiations of adjacent bands; however, such phenomena do not prevent from obtaining a considerable widening of the comprehensive band.

As an example, in the embodiments illustrated in figures 3 and 4 the radiation source **4** includes four SLEDs **20;** obviously the number of the SLEDs **20** can be different (e.g. two, three or more than four) as depending on the features of the SLEDs **20** available in the market and as a function of the wanted comprehensive bandwidth **L_{U}.**

The example shown in figure 2 refers to the particular case of a single slice **2** of semiconductor material placed on a support layer **3.** However, applications of an apparatus and a method according to the present invention are not limited to the dimensional checking of pieces of this type. In fact, such apparatuses and methods can also be employed, for example, for measuring the thickness of one or more slices **2** of semiconductor material and/or of layers made of other materials located inside a per se known multilayer structure.

The above described apparatus **1** has many advantages since it can be easily and cheaply implemented, and especially it enables to measure thicknesses that are definitely smaller than the ones measured by similar known apparatuses. It is important to note that by only modifying the radiation source **4** it is possible to implement the above described apparatus **1** employing an existing apparatus, thus involving reduced update complexity and costs.

## Claims

1. Apparatus (1) for optically measuring by interferometry the thickness of an object **(2)** having an external surface **(16)** and an internal surface **(17)** opposite with respect to the external surface **(16);** the apparatus **(1)** includes:
a radiation source **(4)** emitting a low coherence beam of radiations **(I)** composed of a number of wavelengths within a determined band;
a spectrometer **(5)** analyzing the spectrum of the result of the interference between radiations **(R1)** that are reflected by the external surface **(16)** without entering the object **(2)** and radiations **(R2)** that are reflected by the internal surface **(17)** entering the object **(2);**
an optical probe **(6)** which is connected by means of optical fibers **(8, 10, 11)** to the radiation source **(4)** and to the spectrometer **(5),** and is arranged in such a way to face the object **(2)** to be measured for directing the beam of radiations **(I)** emitted by the radiation source **(4)** towards the external surface **(16)** of the object **(2),** and for collecting the radiations **(R)** that are reflected by the object **(2);** and
a processing unit **(18)** that calculates the thickness of the object **(2)** as a function of the spectrum provided by the spectrometer **(5);**
the apparatus **(1)** is **characterized by** the fact that the radiation source **(4)** includes at least two distinct emitters **(20)** emitting respective radiation beams that differ in their wavelength band from one another so that the combined bandwidth is greater than the bandwidth of each emitter and are concurrently activated.

2. Apparatus **(1)** according to claim 1, wherein the radiation source **(4)** includes an optical adder **(21),** which enables to join in a single comprehensive radiation beam the radiation beams emitted by the emitters **(20)** in such a way that the radiation source **(4)** emits a comprehensive radiation beam.

3. Apparatus **(1)** according to claim 1 or claim 2, wherein the radiation source **(4)** emits a radiation beam, the bandwidth thereof is greater than 100 nm around a central value.

4. Apparatus **(1)** according to claim 3, wherein the radiation source **(4)** emits a radiation beam, the bandwidth thereof is about 200 nm around the central value.

5. Apparatus **(1)** according to claim 3 or claim 4, wherein the central value is comprised between 1100 nm and 1300 nm.

6. Apparatus **(1)** according to claim 5, wherein the central value is of about 1200 nm.

7. Apparatus **(1)** according to any one of claims 1 to 6, wherein the radiation beam emitted by each emitter (20) has its own wavelength band which is different from, and substantially complementary to, the wavelength bands of the radiation beams emitted by the other emitters **(20).**

8. Apparatus **(1)** according to any one of claims 1 to 7, wherein the radiation source **(4)** includes at least four emitters **(20).**

9. Apparatus **(1)** according to any one of claims 1 to 8, wherein each emitter **(20)** includes a SLED.

10. Apparatus **(1)** according to any one of claims 1 to 9, wherein the object **(2)** is a slice of semiconductor material.

11. Apparatus **(1)** according to claim 10, wherein the object **(2)** is a silicon slice.

12. Method for optically measuring by interferometry the thickness of an object **(2)** having an external surface **(16)** and an internal surface **(17)** opposite with respect to the external surface **(16);** the method including the steps of:
emitting a low coherence beam of radiations **(I)** composed of a number of wavelengths within a determined band by means of a radiation source **(4);**
directing the beam of radiations **(I)** onto the external surface **(16)** of the object **(2)** by means of an optical probe **(6);**
collecting the radiations **(R)** that are reflected by the object **(2)** by means of the optical probe **(6);**
analysing by means of a spectrometer **(5)** the spectrum of the result of the interference between radiations **(R1)** that are reflected by the external surface **(16)** without entering the object **(2)** and radiations **(R2)** that are reflected by the internal surface **(17)** entering the object **(2);** and
determining the thickness of the object **(2)** as a function of the spectrum provided by the spectrometer **(5) ;**
the method is **characterized by** the fact that it includes the further steps of:
concurrently activating at least two distinct emitters **(20)** of the radiation source **(4)** that emit respective radiation beams differing in their wavelength band one from another so that the combined bandwidth is greater than the bandwidth of each emitter; and
joining in a single radiation beam the radiation beams emitted by the emitters **(20)** in such a way that the radiation source **(4)** emits a comprehensive radiation beam.

## Patentansprüche

1. Vorrichtung **(1)** zum optischen Messen mittels Interferometrie der Dicke eines Gegenstands **(2),** der eine äußere Oberfläche **(16)** und eine bezüglich der äußeren Oberfläche **(16)** gegenüberliegende innere Oberfläche **(17)** aufweist; die Vorrichtung **(1)** umfasst:
eine Strahlenquelle **(4),** die ein niedrig-kohärentes Bündel von Strahlen **(I)** abstrahlt, bestehend aus einer Anzahl von Wellenlängen innerhalb eines bestimmten Bands;
ein Spektrometer **(5),** das das Spektrum des Ergebnisses der Interferenz zwischen Strahlen **(R1)**, die von der äußeren Oberfläche **(16)** reflektiert werden, ohne in den Gegenstand **(2)** einzudringen, und Strahlen **(R2),** die von der inneren Oberfläche **(17)** reflektiert werden und in den Gegenstand **(2)** eindringen, analysiert;
eine optische Sonde **(6),** die mittels Lichtwellenleitern **(8, 10, 11)** mit der Strahlenquelle **(4)** und dem Spektrometer **(5)** verbunden ist, und derart angeordnet ist, dass sie dem zu messenden Gegenstand **(2)** zugewandt ist, um das von der Strahlenquelle **(4)** abgestrahlte Bündel von Strahlen **(I)** auf die äußere Oberfläche **(16)** des Gegenstands **(2)** zu richten, und um die Strahlen **(R)** zu erfassen, die von dem Gegenstand **(2)** reflektiert werden; und
eine Verarbeitungseinheit **(18),** die die Dicke des Gegenstands **(2)** als eine Funktion des vom Spektrometer **(5)** bereitgestellten Spektrums berechnet;
die Vorrichtung **(1)** ist **dadurch gekennzeichnet, dass** die Strahlenquelle **(4)** zumindest zwei unterschiedliche Strahler **(20)** einschließt, die entsprechende Strahlenbündel abstrahlen, die sich in ihrem Wellenlängenbereich voneinander unterscheiden, sodass die kombinierte Bandbreite größer als die Bandbreite von jedem Strahler ist, und die gleichzeitig aktiviert sind.

2. Vorrichtung **(1)** nach Anspruch 1, wobei die Strahlenquelle **(4)** einen optischen Addierer **(21)** einschließt, der es ermöglicht, in einem einzigen umfassenden Strahlenbündel die von den Strahlern **(20)** abgestrahlten Strahlenbündel derart zu vereinigen, dass die Strahlenquelle **(4)** ein umfassendes Strahlenbündel abstrahlt.

3. Vorrichtung **(1)** nach Anspruch 1 oder Anspruch 2, wobei die Strahlenquelle **(4)** ein Strahlenbündel abstrahlt, dessen Bandbreite größer als 100 nm um einen mittleren Wert ist.

4. Vorrichtung **(1)** nach Anspruch 3, wobei die Strahlenquelle **(4)** ein Strahlenbündel abstrahlt, dessen Bandbreite ungefähr 200 nm um den mittleren Wert ist.

5. Vorrichtung **(1)** nach Anspruch 3 oder Anspruch 4, wobei der mittlere Wert zwischen 1100 nm und 1300 nm liegt.

6. Vorrichtung **(1)** nach Anspruch 5, wobei der mittlere Wert bei ungefähr 1200 nm liegt.

7. Vorrichtung **(1)** nach einem der Ansprüche 1 bis 6, wobei das von jedem Strahler **(20)** abgestrahlte Strahlenbündel seinen eigenen Wellenlängenbereich aufweist, der sich von den Wellenlängenbereichen der von den anderen Sendern **(20)** abgestrahlten Strahlenbündel unterscheidet und dazu im Wesentlichen komplementär ist.

8. Vorrichtung **(1)** nach einem der Ansprüche 1 bis 7, wobei die Strahlenquelle **(4)** wenigstens vier Strahler **(20)** einschließt.

9. Vorrichtung **(1)** nach einem der Ansprüche 1 bis 8, wobei jeder Strahler (20) eine SLED einschließt.

10. Vorrichtung **(1)** nach einem der Ansprüche 1 bis 9, wobei der Gegenstand (2) eine Scheibe aus Halbleitermaterial ist.

11. Vorrichtung **(1)** nach Anspruch 10, wobei der Gegenstand **(2)** eine Siliziumscheibe ist.

12. Verfahren zum optischen Messen mittels Interferometrie der Dicke eines Gegenstands **(2),** der eine äußere Oberfläche **(16)** und eine bezüglich der äußeren Oberfläche **(16)** gegenüberliegende innere Oberfläche **(17)** aufweist; das Verfahren schließt folgende Schritte ein:
Abstrahlen eines niedrig-kohärenten Bündels von Strahlen **(I),** bestehend aus einer Anzahl von Wellenlängen innerhalb eines bestimmten Bands, mittels einer Strahlenquelle **(4);**
Richten des Bündels von Strahlen **(I)** auf die äußere Oberfläche **(16)** des Gegenstands **(2)** mittels einer optischen Sonde **(6);**
Erfassen der Strahlen (R), die von dem Gegenstand **(2)** reflektiert werden, mittels der optischen Sonde **(6);**
Analysieren mittels eines Spektrometers **(5)** des Spektrums des Ergebnisses der Interferenz zwischen Strahlen **(R1),** die von der äußeren Oberfläche **(16)** reflektiert werden, ohne in den Gegenstand (2) einzudringen, und Strahlen **(R2),** die von der inneren Oberfläche **(17)** reflektiert werden und in den Gegenstand **(2)** eindringen; und
Bestimmen der Dicke des Gegenstands **(2)** als eine Funktion des vom Spektrometer **(5)** bereitgestellten Spektrums;
das Verfahren ist **dadurch gekennzeichnet, dass** es die folgenden weiteren Schritte einschließt:
gleichzeitiges Aktivieren von mindestens zwei unterschiedlichen Strahlern **(20)** der Strahlenquelle **(4),** die entsprechende Strahlenbündel abstrahlen, die sich in ihrem Wellenlängenbereich voneinander unterscheiden, sodass die kombinierte Bandbreite größer als die Bandbreite der einzelnen Strahler ist; und
Vereinigen der von den Strahlern **(20)** abgestrahlten Strahlenbündel in einem einzigen Strahlenbündel derart, dass die Strahlenquelle **(4)** ein umfassendes Strahlenbündel abstrahlt.

## Revendications

1. Appareil **(1)** de mesure optique par interférométrie de l'épaisseur d'un objet **(2)** ayant une surface externe **(16)** et une surface interne **(17)** opposée par rapport à la surface externe **(16);** l'appareil **(1)** inclut:
une source de radiations **(4)** émettant un faisceau à faible cohérence de radiations **(I)** composé d'un certain nombre de longueurs d'onde dans une bande déterminée;
un spectromètre **(5)** analysant le spectre du résultat de l'interférence entre les radiations **(R1)** qui sont réfléchies par la surface externe **(16)** sans pénétrer l'objet **(2)** et les radiations **(R2)** qui sont réfléchies par la surface interne **(17)** en pénétrant l'objet **(2);**
une sonde optique **(6)** qui est connectée par des fibres optiques **(8, 10, 11)** à la source de radiation **(4)** et au spectromètre **(5),** et est disposée de façon à faire face à l'objet **(2)** à mesurer pour orienter le faisceau de radiations **(I)** émis par la source de radiations **(4)** en direction de la surface externe **(16)** de l'objet **(2)** et pour collecter les radiations **(R)** qui sont réfléchies par l'objet **(2);** et
un processeur **(18)** qui calcule l'épaisseur de l'objet **(2)** en fonction du spectre fourni par le spectromètre **(5);**
l'appareil **(1)** est **caractérisé par le fait que** la source de radiations **(4)** inclut au moins deux émetteurs distincts **(20)** émettant des faisceaux de radiations respectifs qui diffèrent l'un de l'autre par leurs bandes de longueurs d'onde de façon que la largeur de bande combinée soit supérieure à la largeur de bande de chaque émetteur et sont activés simultanément.

2. Appareil **(1)** selon la revendication 1 où la source de radiations **(4)** inclut un additionneur optique **(21)** qui permet de joindre en un unique faisceau total de radiations les faisceaux de radiations émis par les émetteurs **(20)** de façon que la source de radiations **(4)** émette un faisceau total de radiations.

3. Appareil **(1)** selon la revendication 1 ou la revendication 2 où la source de radiations **(4)** émet un faisceau de radiations dont la largeur de bande est supérieure à 100 nm autour d'une valeur centrale.

4. Appareil (1) selon la revendication 3 où la source de radiations (4) émet un faisceau de radiations dont la largeur de bande est d'environ 200 nm autour de la valeur centrale.

5. Appareil **(1)** selon la revendication 3 ou la revendication 4 où la valeur centrale est comprise entre 1100 nm et 1300 nm.

6. Appareil **(1)** selon la revendication 5 où la valeur centrale est d'environ 1200 nm.

7. Appareil **(1)** selon l'une quelconque des revendications 1 à 6 où le faisceau de radiations émis par chaque émetteur **(20)** a sa propre bande de longueurs d'onde qui est différente de, et substantiellement complémentaire aux bandes de longueurs d'onde des faisceaux de radiations émis par les autres émetteurs **(20).**

8. Appareil **(1)** selon l'une quelconque des revendications 1 à 7 où la source de radiations **(4)** inclut au moins quatre émetteurs **(20).**

9. Appareil **(1)** selon l'une quelconque des revendications 1 à 8 où chaque émetteur (20) inclut un SLED.

10. Appareil **(1)** selon l'une quelconque des revendications 1 à 9 où l'objet **(2)** est une tranche de matériau semi-conducteur.

11. Appareil (1) selon la revendication 10 où l'objet **(2)** est une tranche de silicium.

12. Méthode de mesure optique par interférométrie de l'épaisseur d'un objet **(2)** ayant une surface externe **(16)** et une surface interne **(17)** opposée par rapport à la surface externe **(16) ;** la méthode incluant les étapes de:
émission d'un faisceau à faible cohérence de radiations **(I)** composé d'un certain nombre de longueurs d'onde dans une bande déterminée au moyen d'une source de radiations **(4);**
orientation du faisceau de radiation **(I)** sur la surface externe **(16)** de l'objet **(2)** au moyen d'une sonde optique **(6);**
collecte des radiations **(R)** qui sont réfléchies par l'objet **(2)** au moyen d'une sonde optique **(6);**
analyse au moyen d'un spectromètre **(5)** du spectre du résultat de l'interférence entre les radiations **(R1)** qui sont réfléchies par la surface externe **(16)** sans pénétrer l'objet **(2)** et les radiations **(R2)** qui sont réfléchies par la surface interne **(17)** en pénétrant l'objet **(2);** et
détermination de l'épaisseur de l'objet **(2)** en fonction du spectre fourni par le spectromètre **(5);**
la méthode est **caractérisée par le fait qu'**elle inclut les étapes suivantes de:
activation simultanée d'au moins deux émetteurs distincts **(20)** de la source de radiations **(4)** qui émettent des faisceaux de radiations respectifs qui diffèrent l'un de l'autre par leurs bandes de longueurs d'onde de façon que la largeur de bande combinée soit supérieure à la largeur de bande de chaque émetteur; et
jonction en un unique faisceau de radiations les faisceaux de radiations émis par les émetteurs **(20)** de façon que la source de radiations **(4)** émette un faisceau total de radiations.
